Europäisches Patentamt

European Patent Office

Office européen des brevets

(11) Publication number: 0 212 761
A2

## (12) EUROPEAN PATENT APPLICATION

(21) Application number: 86201456.0

(22) Date of filing: 22.08.86

(51) Int. Cl.⁴: H04Q 7/04

(30) Priority: 28.08.85 GB 8521430

(43) Date of publication of application:
04.03.87 Bulletin 87/10

(84) Designated Contracting States:
CH DE FR GB LI SE

(71) Applicant: PHILIPS ELECTRONIC AND
ASSOCIATED INDUSTRIES LIMITED
Arundel Great Court 8 Arundel Street
London WC2R 3DT(GB)
Applicant: N.V. Philips' Gloeilampenfabrieken
Groenewoudseweg 1
NL-5621 BA Eindhoven(NL)

(72) Inventor: Sharpe, Anthony Keith
Pye Telecommunications Limited St.
Andrews Road
Cambridge CB4 1DW(GB)

(74) Representative: Osborne, David Ernest et al
Philips Electronic and Associated Industries
Limited Patent Department Mullard House
Torrington Place
London WC1E 7HD(GB)

(54) Communications system.

(57) A mobile communications system which makes use of the existing paging network and PSTN.

The system utilises a plurality of strategically placed fixed stations (FS1 to FSn) connected to the PSTN. System subscribers have cordless telephones (CT1 to CT4) which are operatively linked to the PSTN via the fixed stations. Each cordless telephone (CT1 to CT4) has a message pager which is capable of receiving paging messages transmitted by the paging network transmitters (P1 to P3).

A call to a cordless telephone is initiated by a paging signal giving the calling subscriber's number and the cordless telephone establishes a radio link with an in-range fixed station, wherever it is in the geographical area, and calls back to the initiating subscriber. The radio link with fixed station has to be maintained for the duration of the call because there is no provision for handing-off as in a MATS. Call charging may be related to the rate of discharge, which rate may vary with call type, of at least one battery in the cordless telephone (CT1 to CT4).

Fig.1.

## COMMUNICATIONS SYSTEM

The present invention relates to a communications system particularly, but not exclusively, a mobile communications system which is relatively inexpensive to implement.

The public switched telephone network - (PSTN) is well established worldwide and has the features of requiring a great deal of infrastructure in the form of telephone exchanges, cabling networks and radio links. From the subscribers point of view, mobility is somewhat limited because ultimately the telephone is connected by cable to the PSTN. In recent years cordless telephones have appeared which provide some mobility for a subscriber provided he remains in range, for example up to 100 metres, of a dedicated fixed station. Once a cordless telephone is out of range then communication with the fixed station is not possible.

Mobile automatic telephone systems (MATS) provide a higher degree of mobility but require an expensive computer network to enable handing-off from one local area to the next. Also even though the range of a MATS telephone is relatively small, several kilometres, it does require a moderately powerful transmitter and a receiver which is on standby when not actually being used. Consequently such telephones require a relatively large power supply to operate them, which power is conveniently supplied by mobiles, although portable MATS telephones are available.

Paging systems are well established and enable the owner of a paging receiver to be alerted, and messages stored, by relatively powerful paging signals transmitted from fixed sites arranged to cover a geographical area. Because paging receivers are on stand-by for long periods every effort is made to economise on the current consumption to extend the working life of their batteries which in any event have a small capacity. Consequently they are not used for two-way communications via antennae at the fixed sites.

An object of the present invention is to provide a communication system which avoids the need for additional expensive infrastructure but enables a subscriber to roam over a wide area whilst still having a communications capability.

According to the present invention there is provided a communications system comprising a paging network accessible via the public switched network (PSTN), a plurality of geographically spread fixed stations operatively coupled to the PSTN, each fixed station comprising a transmitter, receiver, encoder and decoder, and a plurality of cordless telephones capable of communicating with any one of the fixed stations, when in range, each cordless telephone including a message pager.

The communications system in accordance with the present invention exploits the infrastructure already existing to provide the basis for establishing the system. By the cordless telephones including message pagers then a wide area paging system can be used to contact initially the cordless telephone which has a low powered transmitter to set-up a communications link with a nearby in-range fixed station. By suitably distributing the fixed stations geographically a subscriber with a cordless telephone including a message pager is able to establish a two-way telephone link from a point anywhere in the area covered.

Each cordless telephone may include an in-range detector which enables a cordless telephone operator to verify that he is in contact with the fixed station with which he has established a temporary radio link.

If desired the message pager in the cordless telephone may include a memory enabling pager calls to be stored whilst the cordless telephone is engaged. Such a facility enables an operator to return calls later after he has completed a current call, this type of facility is not possible with an ordinary telephone because the calling party does not send his identification as is done in the system in accordance with the present invention.

The mobility of the present communications system may be increased by coupling a fixed station to a MATS extension thereby enabling communication to be made from public transport whilst it is in motion.

In its standby mode, the cordless telephone is de-energised apart from the message pager which includes battery economising means. By these means the battery life is extended without reducing the accessibility to the cordless telephone.

The present invention also relates to a cordless telephone for use in, and to a method of operating, the communications system made in accordance with the present invention.

The present invention will now be described, by way of example, with reference to the accompanying drawings, wherein

Figure 1 is a diagrammatic view of part of the overall communications system, and

Figure 2 shows, in enlarged form, three fixed stations and some cordless telephones.

In the drawings corresponding reference numerals indicate the same features.

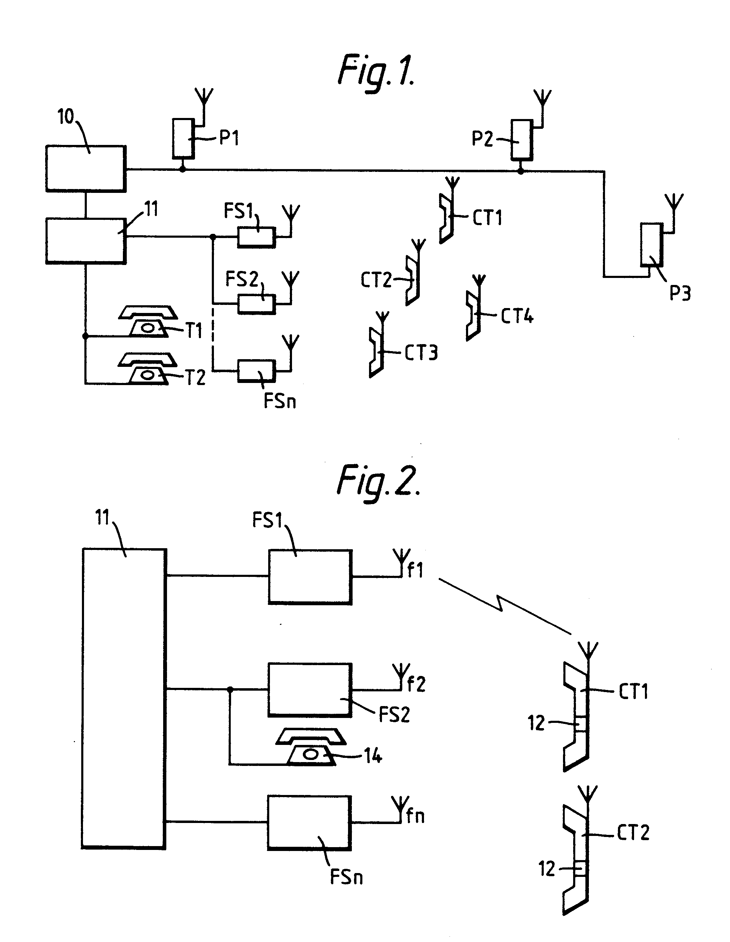

Referring to Figure 1, the system comprises synchronous or quasi-synchronous operating wide-area paging transmitters P1, P2 and P3 coupled to a base station 10 which includes paging computers and control equipment. The base station 10 is connected to the PSTN 11. A plurality of cordless telephone fixed stations FS1, FS2 and FSn are also connected to the PSTN 11. Each fixed station FS1 to FSn comprises a transmitter/receiver encoder/decoder unit. A plurality of cordless telephones CT1 to CT4 are provided. Each cordless telephone CT comprises a low power, for example 10mW, transmitter/receiver, encoder/decoder and a message pager receiver, that is a receiver capable of storing and/or displaying in numeric form messages transmitted by the paging transmitters P1 to P3.

The fixed stations FS1 to FSn are distributed geographically preferably so as to be in the range, say 50 metres, of a cordless telephone wherever it is in the area being covered. The fixed stations FS1 to FSn are not dedicated on say a one to one basis with the cordless telephones CT1 to CT4, but each, that is the fixed stations and the cordless telephones, has a unique address, which may be different from the paging address and which can be used in call set-up. As a result of such an arrangement the user of a cordless telephone can roam throughout the area covered by the fixed stations and yet be capable of communicating with other cordless telephones and any subscriber connected to the PSTN. Also shown in Figure 1 are some fixed subscribers' telephones T1, T2 connected to the PSTN 11.

Figure 2 shows part of the system in greater detail and illustrates some different variants. Each of the fixed stations FS1 to FSn is identical, simple, can be mass produced, can be attached to any fixed extension and operates on a single frequency associated with one of a plurality of predetermined channel frequencies f1 to fn. The cordless telephone CT can be constructed to operate on a single channel frequency, say f1, so that it acts as a cordless telephone extension or is tunable so that it is capable of searching through the available channels f1 to fn and selecting the best unoccupied channel. In order to assist in ensuring good communications the cordless telephones incorporate an in-range indicator (not shown). Each cordless telephone also includes a message pager 12.

Referring back to Figure 2 the line from the PSTN 11 is shared between a fixed extension 14 and the fixed station FS2, whereas fixed stations FS1 and FSn are dedicated to a respective PSTN line.

The cordless telephones could operate on any allocated frequency and 10, 20 or 40 channels would probably be adequate.

The cordless telephones CT are battery powered and in operation the message pagers 12 are the only part permanently powered, subject to an appropriate battery economising scheme. The cordless telephone proper would only be powered by the user when making a call, either in answer to a page or to initiate a call.

Calls can be essentially of three types, namely (1) a cordless telephone to a fixed subscriber's telephone (2) a fixed subscriber's telephone to a cordless telephone; and (3) a cordless telephone to a cordless telephone.

In call type (1) the cordless telephone CT is brought into the range of a fixed station FS and if necessary its channel frequency tuned to that of the fixed station. The call then proceeds as is normal for an outgoing call from a cordless telephone.

In call type (2) a fixed subscriber dials the paging number of the cordless telephone, which number is conveniently the cordless telephone's number also. The paging terminal included in the base station 10 will know from the number dialled that the call is to a cordless telephone and as part of the acceptance procedure the paging terminal will require the calling subscriber to enter his own number. Where available, automatic call number identification will be employed. Once the call has been accepted the calling subscriber hangs-up and waits. The paging terminal transmits the calling subscriber's number as part of the paging message. The message pager 12 in the addressed cordless telephone (CT) on decoding the message alerts the CT subscriber. When the subscriber wishes to respond, the response command/action first initiates a search for the nearest, free, in-range fixed station FS and then transmits the calling subscriber's number and the call then proceeds as in call type (1). The latter transmission of the calling subscriber's number may be made automatic; the pager may be coupled to the cordless telephone to transmit the calling subscriber's number thereto together with an actuation signal which actuates the transmission of this number over the PSTN 11 when the cordless telephone is in-range of a fixed station FS. The message pager can include a display panel identifying the subscriber's number.

With respect to call type (3), the initiating cordless telephone, say CT1, establishes a link with a fixed station, say FS1, and dials the number of the called cordless telephone, say CT2. The fixed station FS1 adds its identity as the calling subscriber's number to the requested cordless telephone's number and both are transmitted by the PSTN 11 to the paging terminal in the base station 10 which transmits a paging signal as is done in case (2). Thereafter the procedure is as in the call type (2) but in this instance since the call was initiated by a cordless telephone then it has to remain energised and within the range of the fixed station FS1 to receive the response call. The identity of the fixed station will have located the initiating cordless telephone CT1.

The fixed stations can be attached to mobile automatic telephone systems (MATS) mobiles and thus entry into the PSTN 11 can be made from cordless telephones on public vehicles such as trains, buses and aircraft. Such an arrangement will allow a larger degree of roaming by a user which otherwise is limited because the link between a cordless telephone and a fixed station once established has to remain for the duration of the call as there are no facilities for handing-off as in a MATS.

If desired the message pager 12 in a cordless telephone may include a memory capable of storing paging calls received whilst the cordless telephone is engaged in a call.

Traditional forms of charging by metered call length may not be possible because it is the subscriber with a cordless telephone who sets-up the call, perhaps after being paged Via one of the fixed stations. One way of charging a subscriber with a cordless telephone is based on the rate of discharge of the batteries fitted in the cordless telephones. By having separate batteries of a unique shape for the message pager 12 and the cordless telephone proper; then say the rate of discharge of the battery powering the cordless telephone proper can be related to the number dialled, for example local, STD or international, for the duration of the call. Thus if a PTT authority is a sole supplier of these uniquely shaped batteries which are sold only through approved retailers then they can effectively charge the cordless telephone subscriber on the basis of the type of call and the call length.

In another form of the system, large companies owning a PABX system are licensed to operate fixed stations having special company codes which are only recognised by cordless telephones owned and operated by the company's cordless telephones. Thus a person carrying a company's cordless telephone can communicate via fixed stations at any of the company's sites or offices.

The communication system in accordance with the present invention provides a roaming type of facility which makes use of the existing paging network and the existing PSTN and avoids the need to establish a new high cost network. This means that the system can be built-up slowly without necessitating a large initial investment. The cordless telephones will be small and lightweight to make them suitable for personal use.

## Claims

1. A communications system comprising a paging network accessible via the public switched network (PSTN), a plurality of geographically spread fixed stations operatively coupled to the PSTN, each fixed station comprising a transmitter, receiver, encoder and decoder, and a plurality of cordless telephones capable of communicating with any one of the fixed stations, when in range, each cordless telephone including a message pager.

2. A communication system as claimed in Claim 1, wherein each cordless telephone includes an in-range detector.

3. A communications system as claimed in Claim 2, wherein each message pager is coupled to the cordless telephone in which it is included for communicating to that cordless telephone a calling subscriber's number transmitted to the message pager and actuating calling of that number over the PSTN when the cordless telephone is in-range of a fixed station.

4. A communications system as claimed in Claim 1,2 or 3, wherein the message pager in a cordless telephone includes a memory enabling paging calls to be stored whilst the cordless telephone is engaged.

5. A communications system as claimed in any one of Claims 1 to 4, wherein each fixed station in a local area operates on a different channel frequency and each cordless telephone includes means to tune the cordless telephone to a particular channel.

6. A communications system as claimed in any one of Claims 1 to 5, wherein at least one fixed station is coupled to a MATs extension.

7. A communications system as claimed in any one of Claims 1 to 6, wherein the message pager includes battery economising means.

8. A communications system as claimed in any one of Claims 1 to 7, wherein the call charging rate is related to the rate of discharge of at least one battery in the cordless telephone.

9. A communication system as claimed in Claim 8, wherein the rate of discharge is related to the type of call.

10. A cordless telephone for use in the communications system as claimed in Claim 1, comprising a transmitter, receiver, encoder, decoder and a message pager.

11. A cordless telephone as claimed in Claim 10, further comprising an in-range detector.

12. A cordless telephone as claimed in Claim 11, wherein the corresponding message pager is coupled thereto for communicating to it a subscriber's number transmitted to the message pager and actuating calling of that number over the PSTN when the cordless telephone is in-range of a fixed station.

13. A cordless telephone as claimed in Claim 10,11 or 12, 11,including means for storing paging messages whilst it is engaged.

14. A cordless telephone as claimed in any one of Claims 10 to 13, wherein the transmitter and receiver are tunable to the channel frequency of a fixed station in the system.

15. A cordless telephone as claimed in any one of Claims 10 to 14, wherein the message pager includes battery economising means.

16. A method of operating a communications system as claimed in Claim 1, wherein calls between a subscriber and a cordless telephone are established by transmitting, as a paging signal, a signal identifying the selected cordless telephone and the subscriber's number, which number is dialled by the cordless telephone on receipt of the paging signal.

17. A method as claimed in Claim 16, wherein the cordless telephone checks that it is within range of a fixed station before dialling the subscriber's number.

18. A method as claimed in Claim 17, wherein the dialling of the subscriber's number occurs automatically after receipt thereof when the cordless telephone is in-range.

19. A method as claimed in Claim 15,16 or 17, wherein in the case of a cordless telephone communicating with another cordless telephone, the subscriber's number transmitted is that of the fixed station through which the calling cordless telephone has dialled the called cordless telephone's number.

20. A method as claimed in claim 19, wherein the calling cordless telephone remains energised for a predetermined time after the paging network has accepted its call.

21. A method as claimed in any one of Claims 15 to 20, wherein each cordless telephone in its standby mode is de-energised and the message pager therein is operated in a battery saving mode.

22. A method as claimed in any one of Claims 15 to 20, wherein the call charging rate is related to the rate of discharge of at least one battery in the cordless telephone.

23. A method as claimed in Claim 22, wherein the rate of discharge is related to the type of call.

# Fig.1.

# Fig.2.